# EUROPÄISCHE PATENTSCHRIFT

(11) **EP 2 062 934 B1**
(45) Veröffentlichungstag und Bekanntmachung des Hinweises auf die Patenterteilung: **11.01.2012**
(21) Anmeldenummer: 08169862.3
(22) Anmeldetag: 25.11.2008
(51) Int. Cl.: C08J 9/00, C08L 25/04, E04B 1/80

(54) **Formteile mit dunkler Oberfläche und geringer Wärmeleitfähigkeit**
Molded parts with dark surface and low heat conductivity
Parties moulées présentant une surface sombre et une faible conductivité thermique

(30) Priorität: 26.11.2007 EP 07121477
(43) Veröffentlichungstag der Anmeldung: 27.05.2009
(73) Patentinhaber: BASF SE, 67056 Ludwigshafen (DE)
(72) Erfinder: Braun, Frank, 67063, Ludwigshafen (DE); Alteheld, Armin, 55543, Bad Kreuznach (DE); Hahn, Klaus, 67281, Kirchheim (DE); Bellin, Ingo, 68159, Mannheim (DE)

(56) Entgegenhaltungen:
- EP-A- 0 620 246
- EP-A- 1 201 838
- WO-A-2006/056387
- WO-A-2007/121928
- DE-A1- 19 545 097
- DE-U1- 20 108 311
- US-B1- 6 465 533
- US-B1- 6 853 189

## Beschreibung

Die vorliegende Erfindung betrifft ein expandierbares Styrolpolymerisat (EPS), enthaltend wenigstens ein dunkles Pigment, welches im Wellenlängenbereich der Infrarotstrahlung reflektiert und nicht absorbiert, ein Verfahren zur Herstellung dieses expandierbaren Styrolpolymerisates, einen Schaumstoff, hergestellt aus dem expandierbaren Styrolpolymerisat, ein Verfahren zur Herstellung solcher Schaumstoffe und die Verwendung dieses Schaumstoffes zur Wärmedämmung, zur thermischen Isolierung von Maschinen und Haushaltsgeräten und als Verpackungsmaterial.

Expandierbare Styrolpolymerisate enthaltend wenigstens einen IR-Reflektor sind aus dem Stand der Technik bereits bekannt.

EP 1 448 681 B1 offenbart ein helles expandierbares vinylaromatisches Polymer und ein Verfahren zur Herstellung desselben. Als IR-Reflektoren werden in dem vinylaromatischen Polymer gemäß EP 1 448 681 B1 Titandioxid oder Bariumsulfat eingesetzt. Das der Erfindung gemäß EP 1 448 681 B1 zugrunde liegende Problem besteht darin, dass bekannte athermane Partikel wie Ruß oder Graphit den entsprechenden Schaumstoffen, welche aus dem expandierbaren vinylaromatischen Polymer gemäß der genannten Schrift hergestellt werden, eine unansehnliche graue oder schwarze Färbung verleihen. Dunkle, expandierbare Styrolpolymerisate werden daher nicht offenbart.

US 5,811,180 offenbart spezielle Pigmente, welche, in Beschichtungsmaterialien eingesetzt, mit dieser Beschichtung behandelte Gegenstände schwer entflammbar machen. Beispiele für solche Pigmente sind gemäß US 5,811,180 Titandioxid in der Rutilmodifikation und rotes Eisenoxid mit Durchmessern von ungefähr 1 bis 2 µm sowie Pigmente aus Aluminium.

WO 2004/094539 A1 offenbart ein Schichtensystem und ein Verfahren zur Reduzierung der Temperatur in einem Innenraum durch Anbringen des Schichtensystems auf den Innenraum. Das Schichtensystem besteht aus zwei Schichten, in dem die erste Schicht wenigstens ein Pigment aus der Gruppe der Perylene enthält, welche für Lichtwellenlängen im Bereich der Infrarotstrahlung transparent sind, so dass dieses Licht durch die erste Schicht hindurchtritt, und von der darunter liegenden zweiten Schicht reflektiert wird.

WO 2005/078023 A2 offenbart schwarze Perylenpigmente, welche in hochmolekularen synthetischen organischen Materialien, beispielsweise Polyolefinen, Polyvinylchlorid, Polyimiden, Polycarbonaten, Polystyrol, Styrolcopolymeren und anderen, verwendet werden können. Die schwarzen Perylenpigmente gemäß WO 2005/078023 sind im Bereich der Infrarotstrahlung transparent, d.h. Stoffe enthaltend diese Pigmente sind damit nicht zur Wärmedämmung geeignet.

DE 195 45 097 A1 offenbart Schaumstoffplatten mit verminderter Wärmeleitfähigkeit. Diese Schaumstoffplatten basieren auf Styrolpolymerisaten, die 0,5 bis 40 Gew.-% Mikroglaskugeln, Aluminiumpulver, Bitumen, Ruß oder Eisenoxidpulver enthalten.

US-B1-6 465 533 offenbart teilchenförmige, expandierbare Styrolpolymere und ein Verfahren zu deren Herstellung. Die Styrolpolymere gemäß diesem Dokument enthalten zur Verbesserung der thermischen Isoliereigenschaften Aluminium-Partikel. Während diese Aluminium-Partikel Infrarotstrahlung reflektieren, können zusätzlich auch Antimontrisulfid-Partikel vorliegen, die Infrarotstrahlung absorbieren.

Die genannten Offenbarungen weisen den Nachteil auf, dass dunkle Gegenstände erhalten werden, die sich bei Bestrahlung mit IR-Strahlung, beispielsweise enthalten im Sonnenlicht, aufheizen, da diese Strahlung nicht reflektiert wird, bzw. die Gegenstände eine hohe Wärmeleitfähigkeit aufweisen. Des Weiteren weisen Gegenstände, die TiO₂ oder BaSO₄ als IR-Reflektor enthalten, eine weiße, und nicht wie für viele Anwendungen gewünscht, eine dunkle Farbe auf.

Der vorliegenden Erfindung liegt die Aufgabe zugrunde, expandierbare Styrolpolymerisate herzustellen, aus denen expandierte Styrolpolymerisate bzw. Schaumstoffe erhalten werden können, die eine geringe Wärmeleitfähigkeit aufweisen. Gleichzeitig sollen sich das aus dem erfindungsgemäßen expandierbaren Styrolpolymerisat hergestellte expandierte Styrolpolymerisat bzw. der Schaumstoff bei Einstrahlung von Licht, beispielsweise Sonnenlicht, nicht aufheizen, so dass sich die aus dem erfindungsgemäßen Material hergestellten Gegenstände aufgrund der thermischen Belastung nicht verformen. Des Weiteren ist es gewünscht, dass die expandierbaren Styrolpolymerisate eine dunkle Farbe aufweisen, damit bei der Herstellung, Verarbeitung und bei der Verwendung keine Verschmutzungen sichtbar werden.

Diese Aufgaben werden gelöst durch ein expandierbares Styrolpolymerisat enthaltend wenigstens ein dunkles Pigment, dessen L*- Wert im L*a*b*-System kleiner als 80 ist, welches im Wellenlängenbereich der Infrarotstrahlung reflektiert und nicht absorbiert wobei als dunkles Pigment ein Mischoxid eingesetzt wird, wobei als Wirtskomponente ein Metalloxid eingesetzt wird, das in der Hämatit-Kristallstruktur vorliegt, und als Gastkomponente ein oder mehrere Elemente ausgewählt aus der Gruppe bestehend aus Aluminium, Antimon, Bismut, Bor, Chrom, Kobalt, Gallium, Indium, Eisen, Lanthan, Lithium, Magnesium, Mangan, Molybdän, Neodym, Nickel, Niob, Silizium, Zinn, Titan, Vanadium, Zink und Mischungen davon, enthält.

Die erfindungsgemäßen expandierbaren Styrolpolymerisate sind in einer bevorzugten Ausführungsform Styrolhomopolymere oder Styrolcopolymere mit bis zu 40 Gew.-%, bezogen auf das Gewicht des Polymers, wenigstens eines weiteren ethylenisch ungesättigten Monomers, insbesondere Alkylstyrole, beispielsweise Divinylbenzol oder α-Methylstyrol oder Acrylnitril. Auch Blends aus Polystyrol mit anderen Polymeren, insbesondere mit Kautschuk und Polyphenylenether, sind möglich.

Im Allgemeinen können alle dem Fachmann bekannten dunklen Pigmente verwendet werden, die Lichtwellen im Wellenlängenbereich der lnfrarotstrahlung zwischen 750 und 25000 nm reflektieren, und die im Wellenlängenbereich der nahen Infrarotstrahlung von 750 bis 2500 nm nicht merklich absorbieren. Unter "dunkel" wird im Rahmen der vorliegenden Erfindung verstanden, dass der L*-Wert im L*a*b-System kleiner als 80 ist. Es ist erfindungsgemäß auch möglich, dass die bevorzugt eingesetzten schwarzen Pigmente durch Mischen mit weiteren Pigmenten, beispielsweise weißen Pigmenten wie TiO₂, aufgehellt werden, so dass auch Grautöne zugänglich sind.

Bevorzugt werden Pigmente in Form von Plättchen, Schuppen, Stäbchen, Kristallen oder Flocken, welche eine ausreichend große reflektierende Flächen aufweisen, eingesetzt.

Das erfindungsgemäß eingesetzte dunkle Pigment weist in einer bevorzugten Ausführungsform einen Brechungsindex von ≥ 1,6, besonders bevorzugt ≥ 1,7, ganz besonders bevorzugt ≥ 1,8 auf.

Bevorzugte Wirtskomponenten in der Hämatit-Kristallstruktur sind ausgewählt aus der Gruppe bestehend aus Cr₂O₃, Al₂O₃, V₂O₃, Ga₂O₃, Fe₂O₃; Mn₂O₃, Ti₂O₃, ln₂O₃, TiBO₃, NiTiO₃, MgTiO₃, CoTiO₃, ZnTiO₃, FeTiO₃, MnTiO₃, CrBO₃, NiCrO₃, FeBO₃, MoO3, FeSn(BO₃)₂, BiFeO₃, AlBO₃, Mg₃Al_{z}Si₃O₁₂, NdAlO₃, LaAlO₃, MnSnO₃, LiNbO₃, LaCoO₃, MgSiO₃, ZnSiO₃, Mn(Sb,Fe)O₃ und Mischungen davon.

Ganz besonders bevorzugt wird als dunkles Pigment wenigstens ein Mischoxid auf Basis Chrom und/oder Eisen eingesetzt. Die erfindungsgemäß einsetzbaren dunklen Pigmente sind nach dem Fachmann bekannten Verfahren herstellbar, siehe beispielsweise US 6,454,848 B2, oder sind kommerziell erhältlich.

Die erfindungsgemäß einsetzbaren Pigmente weisen in der Regel eine Teilchengröße von 0,01 bis 100 µm, bevorzugt 0,1 bis 50 µm, besonders bevorzugt 0,2 bis 20 µm auf.

In einer bevorzugten Ausführungsform liegt das wenigstens eine dunkle Pigment in einer Menge von 0,01 bis 10 Gew.-%, besonders bevorzugt 0,1 bis 8 Gew.-%, jeweils bezogen auf das expandierbare Styrolpolymerisat, vor.

Die Dispergierbarkeit der erfindungsgemäßen dunklen Pigmente kann zudem oft dadurch verbessert werden, dass man die Pigmente mit herkömmlichen Additiven in Kontakt bringt. Neben Additiven auf Basis von Kolophoniumderivaten sind insbesondere auch für die Kunststoffeinfärbung Additive auf Basis von natürlichen und synthetischen Wachsen geeignet. Beispielhaft seien Wachse auf Basis von Polyethylen und von Polypropylen, die auch oxidiert sein können, von Polyethylenoxid, von ethoxylierten Fettalkoholen, von Polyethylenoxid/Polypropylenoxid/Blockcopolymerisaten, von Fettsäureestern (z.B. Montanwachsen), von Fettsäureamiden und von Ethylen/Vinylacetat-Copolymerisaten genannt. Geeignete Additive sind auch nieder- und hochmolekulare Homo- und Copolymere von Styrol.

Neben dem wenigstens einen dunklen Pigment, das in dem erfindungsgemäßen Styrolpolymerisat zwingend vorliegt, können die Styrolpolymerisate die üblichen und bekannten Hilfsmittel und Zusatzstoffe enthalten, beispielsweise Flammschutzmittel, Keimbildner, UV-Stabilisatoren, Kettenüberträger, Treibmittel, Weichmacher, Antioxidantien, Beschichtungsmittel, Hydrophobierungsmittel und/oder Füllstoffe, jeweils in den üblichen Mengen.

In dem erfindungsgemäßen expandierbaren Styrolpolymerisat sind in einer bevorzugten Ausführungsform das Styrolpolymerisat und das wenigstens eine dunkle Pigment homogen miteinander vermischt. In einer weiteren bevorzugten Ausführungsform liegt das wenigstens eine dunkle Pigment an der Oberfläche des expandierbaren Styrolpolymerisates vor.

Die vorliegende Erfindung betrifft auch ein Verfahren zur Herstellung des erfindungsgemäßen expandierbaren Styrolpolymerisates, in dem das Styrolpolymerisat und das wenigstens eine dunkle Pigment homogen miteinander vermischt sind, durch Mischen des expandierbaren Styrolpolymerisats und des wenigstens einen dunklen Pigments.

Die Einarbeitung des wenigstens einen dunklen Pigments in die EPS-Partikel kann nach unterschiedlichen Verfahren erfolgen, die gewährleisten, dass alle in dem erfindungsgemäßen expandierbaren Styrolpolymerisat vorliegenden Komponenten homogen gemischt werden. Bei einer bevorzugten Ausführungsform vermischt man das wenigstens eine dunkle Pigment mit einer Schmelze des Styrolpolymerisates, vorzugsweise in einem Extruder. Dabei wird der Schmelze gleichzeitig das Treibmittel zudosiert. Man kann das wenigstens eine dunkle Pigment auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel und wenigstens ein dunkles Pigment enthaltende Polystyrolschmelze wird ausgepresst und zu treibmittelhaltigem Granulat zerkleinert. Um ein Aufschäumen zu vermeiden, sollte nach dem Auspressen unter Druck rasch abgekühlt werden. Man führt daher zweckmäßigerweise eine Unterwassergranulierung unter Druck durch.

Wird die Polymerschmelze nicht unter Druck behandelt, so kommt es zu einem Aufschäumen des expandierbaren Styrolpolymerisats, wobei ein expandiertes Styrolpolymerisat gebildet wird. In einer bevorzugten Ausführungsform geschieht dieses direkte Aufschäumen durch Auspressen der treibmittelhaltigen Schmelze durch eine entsprechende Düse, so dass direkt expandierte Platten in der gewünschten Größe aus dem expandierbaren Styrolpolymerisat gebildet werden. In einer weiteren Ausführungsform wird die Schmelze durch eine andere geeignete Düse gepresst, so dass expandierte Partikel aus dem expandierbaren Styrolpolymerisat gebildet werden. Die vorliegende Erfindung betrifft auch ein expandiertes Styrolpolymerisat, enthaltend wenigstens ein dunkles Pigment, dessen L*-Wert im L*a*b*-System kleiner als 80 ist, welches im Wellenlängenbereich der Infrarotstrahlung reflektiert und nicht absorbiert wobei als dunkles Pigment ein Mischoxid eingesetzt wird, wobei als Wirtskomponente ein Metalloxid eingesetzt wird, das in der Hämatit-Kristallstruktur vorliegt, und als Gastkomponente ein oder mehrere Elemente ausgewählt aus der Gruppe bestehend aus Aluminium, Antimon, Bismut, Bor, Chrom, Kobalt, Gallium, Indium, Eisen, Lanthan, Lithium, Magnesium, Mangan, Molybdän, Neodym, Nickel, Niob, Silizium, Zinn, Titan, Vanadium, Zink und Mischungen davon, enthält. In dem erfindungsgemäßen expandierten Styrolpolymerisat sind in einer bevorzugten Ausführungsform das Styrolpolymerisat und das wenigstens eine dunkle Pigment homogen miteinander vermischt. In einer weiteren bevorzugten Ausführungsform liegt das wenigstens eine dunkle Pigment an der Oberfläche des expandierten Styrolpolymerisates vor.

Die vorliegende Erfindung betrifft daher auch ein Verfahren zur Herstellung eines erfindungsgemäßen expandierten Styrolpolymerisats, in dem das Styrolpolymerisat und das wenigstens eine dunkle Pigment homogen miteinander vermischt sind, indem die erfindungsgemäßen expandierbaren Styrolpolymerisate, in denen das Styrolpolymerisat und das wenigstens eine dunkle Pigment homogen miteinander vermischt sind, aufgeschäumt werden.

Es ist auch möglich, den Styrolpolymerisaten, die wenigstens ein dunkles Pigment enthalten, das Treibmittel in einem gesonderten Verfahrensschritt zuzusetzen. Hierbei werden die Granulate vorzugsweise in wässriger Suspension mit dem Treibmittel imprägniert.

Das wenigstens eine dunkle Pigment kann der Polymerschmelze direkt zugesetzt werden. Man kann das wenigstens eine dunkle Pigment auch in Form eines Konzentrats in dem entsprechenden Polymer, bevorzugt Polystyrol, der Schmelze zusetzen. Bevorzugt werden aber Polymergranulat, insbesondere Polystyrolgranulat und das wenigstens eine dunkle Pigment zusammen in einen Extruder gegeben, das Polymer aufgeschmolzen und mit dem wenigstens einen dunklen Pigment vermischt.

Es ist grundsätzlich auch möglich, das wenigstens eine dunkle Pigment bereits im Verlauf der Suspensionspolymerisation zu inkorporieren. Es kann hierbei vor der Suspendierung den Styrolmonomeren zugesetzt oder im Verlaufe, bevorzugt während der ersten Hälfte des Polymerisationscyclus, dem Reaktionsansatz zugefügt werden. Das Treibmittel wird bevorzugt im Verlaufe der Polymerisation zugegeben, es kann jedoch auch hinterher dem Styrolpolymerisat zugegeben werden. Für die Stabilität der Suspension ist es günstig, wenn bei Beginn der Suspensionspolymerisation eine Lösung von Polystyrol, bzw. einem entsprechenden Styrolcopolymerisat, in Styrol, bzw. der Mischung von Styrol und dem oder den entsprechenden Comonomeren, vorliegt. Bevorzugt geht man dabei von einer Lösung von Polystyrol in Styrol, wobei die Konzentration des Polymers in dem Monomer im Allgemeinen 0,5 bis 30 Gew.-%, bevorzugt 5 bis 20 Gew.-% beträgt, aus. Man kann dabei frisches Polystyrol in Monomeren auflösen, zweckmäßigerweise setzt man aber so genannte Randfraktionen ein, die bei der Auftrennung des bei der Herstellung von expandierbarem Polystyrol anfallenden Perlspektrums als zu große oder zu kleine Perlen ausgesiebt werden. In der Praxis weisen derartige nicht verwendbare Randfraktionen Durchmesser von größer als 2,0 mm bzw. kleiner als 0,2 mm auf. Auch Polystyrol-Recyclat und Polystyrol-Schaumstoff-Recyclat können eingesetzt werden. Eine andere Möglichkeit besteht darin, dass man Styrol in Substanz bis zu einem Umsatz von 0,5 bis 70% vorpolymerisiert und das Vorpolymerisat zusammen mit dem wenigstens einen dunklen Pigment in der wässrigen Phase suspendiert und auspolymerisiert.

Das Treibmittel wird in den üblichen Mengen von etwa 3 bis 10 Gew.-% bezogen auf das Gewicht des Polymeren, zugesetzt. Als Treibmittel eingesetzt werden üblicherweise aliphatische Kohlenwasserstoffe mit 3 bis 10, vorzugsweise 4 bis 6 Kohlenstoffatomen, beispielsweise n-Pentan, iso-Pentan oder Mischungen davon.

Die vorliegende Erfindung betrifft auch ein Verfahren zur Herstellung eines erfindungsgemäßen expandierbaren Styrolpolymerisates, in dem das wenigstens eine dunkle Pigment an der Oberfläche des expandierbaren Styrolpolymerisates vorliegt, durch Beschichten des expandierbaren Styrolpolymerisates mit dem wenigstens einen dunklen Pigment. Das Beschichten mit dem wenigstens einen dunklen Pigment kann nach dem Fachmann bekannten Verfahren erfolgen, beispielsweise Besprühen, Tränken oder Auftrommeln.

Die vorliegende Erfindung betrifft auch ein Verfahren zur Herstellung eines erfindungsgemäßen expandierten Styrolpolymerisates, in dem das wenigstens eine dunkle Pigment an der Oberfläche des expandierten Styrolpolymerisates vorliegt, durch Aufschäumen eines entsprechenden erfindungsgemäßen expandierbaren Styrolpolymerisates. Ein weiteres mögliches Verfahren zur Herstellung der genannten expandierten Styrolpolymerisate umfasst das Aufschäumen des expandierbaren Styrolpolymerisates und anschließendes Beschichten des erhaltenen expandierten Styrolpolymerisates mit dem wenigstens einen dunklen Pigment. Mischen, Aufschäumen und Beschichten kann nach den oben beschriebenen Verfahren erfolgen.

Die vorliegende Erfindung betrifft auch ein Verfahren zur Herstellung von Schaumstoffen durch Herstellen von erfindungsgemäßen expandierbaren Styrolpolymerisaten und Aufschäumen dieser expandierbaren Styrolpolymerisate. Dabei ist es erfindungsgemäß möglich, dass sich das wenigstens eine dunkle Pigment an der Oberfläche des expandierbaren Styrolpolymerisates oder in homogener Mischung mit dem expandierbaren Styrolpolymerisat befindet.

Die Verschäumung der Treibmittel enthaltenden EPS-Partikel zu Schaumstoffen erfolgt üblicherweise ebenfalls nach dem im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im Allgemeinen eine mittlere Partikelgröße von 1 bis 10 mm, insbesondere von 2 bis 8 mm, auf. Die vorliegende Erfindung betrifft auch ein expandiertes Styrolpolymerisat, enthaltend wenigstens ein dunkles Pigment, welches im Wellenlängenbereich der Infrarotstrahlung reflektiert. Die erfindungsgemäßen vorgeschäumten, expandierten Styrolpolymerisate in Form von Partikeln bzw. Perlen können dann in einem zweiten Schritt in gasdurchlässigen Formen mittels Wasserdampf zu Formteilen oder Platten verschweißt werden.

Die vorliegende Erfindung betrifft auch Schaumstoffe, welche aus den erfindungsgemäßen expandierbaren Styrolpolymerisaten herstellbar sind, bevorzugt hergestellt werden.

Die erfindungsgemäßen Schaumstoffe weisen im Allgemeinen eine Dichte von 5 bis 200 g/l, bevorzugt von 8 bis 100 g/l und insbesondere von 10 bis 80 g/l, auf. Bezüglich weiterer Details der Schaumstoffe gilt das oben Gesagte.

Die aus den erfindungsgemäßen expandierbaren Styrolpolymerisaten hergestellten Schaumstoffe zeichnen sich durch eine hervorragende Wärmeisolierung aus. Des Weiteren zeigen das erfindungsgemäße expandierbare Styrolpolymerisat und die daraus hergestellten Schaumstoffe eine dunkle Farbe, die gewährleistet, dass bei der Herstellung, Verarbeitung, Transport und Verwendung entstehende Verschmutzungen nicht stören. Die aus dem erfindungsgemäßen expandierbaren Styrolpolymerisat hergestellten Schaumstoffe heizen sich des Weiteren bei Bestrahlung mit Sonnenlicht nicht auf, so dass es nicht zu einer nachteiligen Verformung aufgrund von Erhitzen kommt.

Die vorliegende Erfindung betrifft auch die Verwendung des erfindungsgemäßen Schaumstoffes zur Wärmedämmung, beispielsweise von Gebäuden oder Gebäudeteilen. Dabei können die erfindungsgemäßen Schaumstoffe auf der Außen- als auch auf der Innenseite der zu dämmenden Teile aufgebracht werden.

Die vorliegende Erfindung betrifft auch die Verwendung des erfindungsgemäßen Schaumstoffes zur thermischen Isolierung von Maschinen und Haushaltsgeräten, beispielsweise Backöfen, Kühlschränken, Gefriertruhen, Warmwasserbereitern oder Isolierkannen.

Die vorliegende Erfindung betrifft auch die Verwendung des erfindungsgemäßen Schaumstoffes als Verpackungsmaterial. Dabei kann der Schaumstoff teilchenförmig verwendet werden, so dass der zu verpackende Gegenstand in einer losen Schüttung liegt. Es ist auch möglich, dass aus dem erfindungsgemäßen Schaumstoff ein einteiliges Werkstück hergestellt wird, in das der zu verpackende Gegenstand eingebettet wird.

## Patentansprüche

1. Expandierbares Styrolpolymerisat enthaltend wenigstens ein dunkles Pigment dessen L*-Wert im L*a*b-System als 80 ist, welches im Wellenlängenbereich der Infrarotstrahlung reflektiert und nicht absorbiert, wobei als dunkles Pigment ein Mischoxid eingesetzt wird, wird als Wirtskomponente ein Metalloxid eingesetzt wird, das in der Hämatit-Kristallstruktur vorliegt, und als Gastkomponente ein oder mehrere Elemente ausgewählt aus der Gruppe bestehend aus Aluminium, Antimon, Bismut, Bor, Chrom, Kobalt, Gallium, Indium, Eisen, Lanthan, Lithium, Magnesium, Mangan, Molybdän, Neodym, Nickel, Niob, Silizium, Zinn, Titan, Vanadium, Zink und Mischungen davon, enthält.

2. Styrolpolymerisat nach Anspruch 1, **dadurch gekennzeichnet, dass** das wenigstens eine dunkle Pigment einen Brechungsindex von ≥ 1,6 aufweist.

3. Styrolpolymerisat nach Anspruch 1 oder 2, **dadurch gekennzeichnet, dass** es ein Styrolhomopolymer oder ein Styrolcopolymer mit bis zu 40 Gew.-%, bezogen auf das Gewicht des Polymers, wenigstens eines weiteren ethylenisch ungesättigten Monomers ist.

4. Styrolpolymerisat nach einem der Ansprüche 1 bis 3, **dadurch gekennzeichnet, dass** das wenigstens eine dunkle Pigment in einer Menge von 0,01 bis 10 Gew.-%, bezogen auf das expandierbare Styrolpolymerisat, vorliegt.

5. Styrolpolymerisat nach einem der Ansprüche 1 bis 4, **dadurch gekennzeichnet, dass** das Styrolpolymerisat und das wenigstens eine dunkle Pigment homogen miteinander vermischt sind.

6. Styrolpolymerisat nach einem der Ansprüche 1 bis 4, **dadurch gekennzeichnet, dass** das wenigstens eine dunkle Pigment an der Oberfläche des expandierbaren Styrolpolymerisates vorliegt.

7. Verfahren zur Herstellung des expandierbaren Styrolpolymerisates nach Anspruch 5 durch Mischen des expandierbaren Styrolpolymerisats und des wenigstens einen dunklen Pigments.

8. Verfahren zur Herstellung eines expandierbaren Styrolpolymerisates nach Anspruch 6 durch Beschichten des expandierbaren Styrolpolymerisates mit dem wenigstens einen dunklen Pigment.

9. Expandiertes Styrolpolymerisat, enthaltend wenigstens ein dunkles Pigment dessen L*-Wert im L*a*b-System als 80 ist, welches im Wellenlängenbereich der Infrarotstrahlung reflektiert und nicht absorbiert, wobei als dunkles Pigment ein Mischoxid eingesetzt wird, wird als Wirtskomponente ein Metalloxid eingesetzt wird, das in der Hämatit-Kristallstruktur vorliegt, und als Gastkomponente ein oder mehrere Elemente ausgewählt aus der Gruppe bestehend aus Aluminium, Antimon, Bismut, Bor, Chrom, Kobalt, Gallium, Indium, Eisen, Lanthan, Lithium, Magnesium, Mangan, Molybdän, Neodym, Nickel, Niob, Silizium, Zinn, Titan, Vanadium, Zink und Mischungen davon, enthält.

10. Expandiertes Styrolpolymerisat nach Anspruch 9, **dadurch gekennzeichnet, dass** das Styrolpolymerisat und das wenigstens eine dunkle Pigment homogen miteinander vermischt sind.

11. Expandiertes Styrolpolymerisat nach Anspruch 9, **dadurch gekennzeichnet, dass** das wenigstens eine dunkle Pigment an der Oberfläche des expandierten Styrolpolymerisates vorliegt.

12. Verfahren zur Herstellung eines expandierten Styrolpolymerisats nach Anspruch 10, **dadurch gekennzeichnet, dass** expandierbare Styrolpolymerisate nach Anspruch 5 aufgeschäumt werden.

13. Verfahren zur Herstellung eines expandierten Styrolpolymerisats nach Anspruch 11, **dadurch gekennzeichnet, dass** expandierbare Styrolpolymerisate nach Anspruch 6 aufgeschäumt werden.

14. Schaumstoff, herstellbar aus dem expandierbaren Styrolpolymerisat nach Anspruch 5 oder 6.

15. Verfahren zur Herstellung von Schaumstoffen nach Anspruch 14 durch Herstellen von expandierbaren Styrolpolymerisaten nach Anspruch 7 oder 8 und Aufschäumen dieser expandierbaren Styrolpolymerisate.

16. Verwendung eines Schaumstoffes nach Anspruch 14 zur Wärmedämmung, zur thermischen Isolierung von Maschinen und Haushaltsgeräten und als Verpackungsmaterial.

## Claims

1. An expandable styrene polymer comprising at least one dark-colored pigment whose * value in the L*a*b system is smaller than 80, and which in the wavelength range of infrared radiation reflects and does not absorb, where dark-colored pigment used comprises a mixed oxide, where host component used comprises a metal oxide which has the hematite crystal structure and introduced component used comprises one or more elements selected from the group consisting of aluminum, antimony, bismuth, boron, chromium, cobalt, gallium, indium, iron, lanthanum, lithium, magnesium, manganese, molybdenum, neodymium, nickel, niobium, silicon, tin, titanium, vanadium, zinc, and mixtures thereof.

2. The styrene polymer according to claim 1, wherein the refractive index of the at least one dark-colored pigment is ≥ 1.6.

3. The styrene polymer according to claim 1 or 2, which is a styrene homopolymer or a styrene copolymer with up to 40% by weight, based on the weight of the polymer, of at least one further ethylenically unsaturated monomer.

4. The styrene polymer according to any of claims 1 to 3, wherein the amount of the at least one dark-colored pigment is from 0.01 to 10% by weight, based on the expandable styrene polymer.

5. The styrene polymer according to any of claims 1 to 4, wherein the styrene polymer and the at least one dark-colored pigment have been mixed homogeneously with one another.

6. The styrene polymer according to any of claims 1 to 4, wherein the at least one dark-colored pigment is present at the surface of the expandable styrene polymer.

7. A process for the production of the expandable styrene polymer according to claim 5 via mixing of the expandable styrene polymer and of the at least one dark-colored pigment.

8. A process for the production of an expandable styrene polymer according to claim 6 via coating of the expandable styrene polymer with the at least one dark-colored pigment.

9. An expanded styrene polymer comprising at least one dark-colored pigment whose L* value in the L*a*b* system is smaller than 80, and which in the wavelength range of infrared radiation reflects and does not absorb, where dark-colored pigment used comprises a mixed oxide, where host component used comprises a metal oxide which has the hematite crystal structure and introduced component used comprises one or more elements selected from the group consisting of aluminum, antimony, bismuth, boron, chromium, cobalt, gallium, indium, iron, lanthanum, lithium, magnesium, manganese, molybdenum, neodymium, nickel, niobium, silicon, tin, titanium, vanadium, zinc, and mixtures thereof.

10. The expanded styrene polymer according to claim 9, wherein the styrene polymer and the at least one dark-colored pigment have been mixed homogeneously with one another.

11. The expanded styrene polymer according to claim 9, wherein the at least one dark-colored pigment is present at the surface of the expanded styrene polymer.

12. A process for the production of an expanded styrene polymer according to claim 10, which comprises foaming expandable styrene polymers according to claim 5.

13. A process for the production of an expanded styrene polymer according to claim 11, which comprises foaming expandable styrene polymers according to claim 6.

14. A foam that can be produced from the expandable styrene polymer according to claim 5 or 6.

15. A process for the production of foams according to claim 14 via production of expandable styrene polymers according to claim 7 or 8 and foaming of these expandable styrene polymers.

16. The use of a foam according to claim 14 for thermal insulation, including that of machines and of household equipment, and as packaging material.

## Revendications

1. Polymérisat de styrène expansible, contenant au moins un pigment foncé, dont la valeur L* dans le système L*a*b* est inférieure à 80, qui réfléchit et n'absorbe pas dans la région de longueurs d'onde du rayonnement infrarouge, en tant que pigment foncé étant utilisé un oxyde mixte, en tant que composant incluant étant utilisé un oxyde métallique qui est présent en la structure cristalline hématite, et contenant en tant que composant inclus un ou plusieurs éléments choisis dans le groupe constitué par l'aluminium, l'antimoine, le bismuth, le bore, le chrome, le cobalt, le gallium, l'indium, le fer, le lanthane, le lithium, le magnésium, le manganèse, le molybdène, le néodyme, le nickel, le niobium, le silicium, l'étain, le titane, le vanadium, le zinc et des mélanges de ceux-ci.

2. Polymérisat de styrène selon la revendication 1, **caractérisé en ce que** ledit au moins un pigment foncé présente un indice de réfraction de ≥ 1,6.

3. Polymérisat de styrène selon la revendication 1 ou 2, **caractérisé en ce qu'**il est un homopolymère de styrène ou un copolymère de styrène avec jusqu'à 40 % en poids, par rapport au poids du polymère, d'au moins un autre monomère à insaturation éthylénique.

4. Polymérisat de styrène selon l'une quelconque des revendications 1 à 3, **caractérisé en ce que** ledit au moins un pigment foncé est présent en une quantité de 0,01 à 10 % en poids, par rapport au polymérisat de styrène expansible.

5. Polymérisat de styrène selon l'une quelconque des revendications 1 à 4, **caractérisé en ce que** le polymérisat de styrène et ledit au moins un pigment foncé sont mélangés l'un avec l'autre de façon homogène.

6. Polymérisat de styrène selon l'une quelconque des revendications 1 à 4, **caractérisé en ce que** ledit au moins un pigment foncé se trouve à la surface du polymérisat de styrène expansible.

7. Procédé pour la préparation du polymérisat de styrène expansible selon la revendication 5, par mélange du polymérisat de styrène expansible et dudit au moins un pigment foncé.

8. Procédé pour la préparation d'un polymérisat de styrène expansible selon la revendication 6, par enduction du polymérisat de styrène expansible avec ledit au moins un pigment foncé.

9. Polymérisat de styrène expansé, contenant au moins un pigment foncé dont la valeur L* dans le système L*a*b* est inférieure à 80, qui réfléchit et n'absorbe pas dans la région de longueurs d'onde du rayonnement infrarouge, en tant que pigment foncé étant utilisé un oxyde mixte, en tant que composant incluant étant utilisé un oxyde métallique qui est présent en la structure cristalline hématite, et contenant en tant que composant inclus un ou plusieurs éléments choisis dans le groupe constitué par l'aluminium, l'antimoine, le bismuth, le bore, le chrome, le cobalt, le gallium, l'indium, le fer, le lanthane, le lithium, le magnésium, le manganèse, le molybdène, le néodyme, le nickel, le niobium, le silicium, l'étain, le titane, le vanadium, le zinc et des mélanges de ceux-ci.

10. Polymérisat de styrène expansé selon la revendication 9, **caractérisé en ce que** le polymérisat de styrène et ledit au moins un pigment foncé sont mélangés l'un avec l'autre de façon homogène.

11. Polymérisat de styrène expansé selon la revendication 9, **caractérisé en ce que** ledit au moins un pigment foncé se trouve à la surface du polymérisat de styrène expansé.

12. Procédé pour la production d'un polymérisat de styrène expansé selon la revendication 10, **caractérisé en ce qu'**on soumet à une expansion des polymères de styrène expansibles selon la revendication 5.

13. Procédé pour la production d'un polymérisat de styrène expansé selon la revendication 11, **caractérisé en ce qu'**on soumet à une expansion des polymères de styrène expansibles selon la revendication 6.

14. Mousse, pouvant être produite à partir du polymérisat de styrène expansible selon la revendication 5 ou 6.

15. Procédé pour la production de mousses selon la revendication 14, par production de polymères de styrène expansibles selon la revendication 7 ou 8 et expansion de ces polymères de styrène expansibles.

16. Utilisation d'une mousse selon la revendication 14, pour le calorifugeage, pour l'isolation thermique de machines d'appareils ménagers et comme matériau d'emballage.
